# EUROPEAN PATENT SPECIFICATION

(11) **EP 4 189 675 B1**
(45) Date of publication and mention of the grant of the patent: **14.02.2024**
(21) Application number: 20757466.6
(22) Date of filing: 31.07.2020
(51) Int. Cl.: G06N 3/084, G10L 25/12, G10L 25/18, G10L 21/003

(54) **SIGNAL TRANSFORMATION BASED ON UNIQUE KEY-BASED NETWORK GUIDANCE AND CONDITIONING**
SIGNALTRANSFORMATION BASIEREND AUF UNIKALSCHLÜSSELBASIERTER NETZWERKFÜHRUNG UND KONDITIONIERUNG
TRANSFORMATION DU SIGNAL BASÉ SUR GUIDAGE RÉSEAU ET CONDITIONNEMENT BASÉ SUR UNE CLÉ UNIQUE

(43) Date of publication of application: 07.06.2023
(73) Proprietor: DTS, Inc., Calabasas, CA 91302 (US)
(72) Inventor: VENKATRAMAN, Atti, Calabasas, California 91302 (US); FEJZO, Zoran, Calabasas, California 91302 (US); KALKER, Antonius, Calabasas, California 91302 (US)
(74) Representative: Müller, Wolfram Hubertus
(86) International application number: PCT/US2020/044522
(87) International publication number: WO 2022/025923

(56) References cited:
- CN-A- 110 136 690
- US-A1- 2019 341 067
- LIQIANG ZHANG ET AL: "Learning Singing From Speech", ARXIV.ORG, CORNELL UNIVERSITY LIBRARY, 201 OLIN LIBRARY CORNELL UNIVERSITY ITHACA, NY 14853, 20 December 2019 (2019-12-20), XP081564789,
- JU-CHIEH CHOU ET AL: "Multi-target Voice Conversion without Parallel Data by Adversarially Learning Disentangled Audio Representations", ARXIV.ORG, CORNELL UNIVERSITY LIBRARY, 201 OLIN LIBRARY CORNELL UNIVERSITY ITHACA, NY 14853, 9 April 2018 (2018-04-09), XP080868747,

## Description

### TECHNICAL FIELD

The present disclosure relates to performing key-guided signal transformations.

### BACKGROUND

Static machine learning (ML) networks can model and learn a fixed signal transformation function. When there are multiple different signal transformations or in case of a continuously time-varying transformation, the static ML models tend to learn, for example, a suboptimal stochastically averaged transformation. CN110136690 discloses voice conversion. The Mel cepstrum of the source voice is input into a neural network with the target voice Mel cepstrum and speaker numerical ID as conditional parameters. The neural network output is the Mel cepstrum of the converted voice.

### BRIEF DESCRIPTION OF THE DRAWINGS

FIG. 1 is a high-level block diagram of an example system configured with a trained neural network model to perform dynamic key-guided signal transformations.
FIG. 2 is a flow diagram of a first example training process used to train a machine learning (ML) model of a neural network of the system of FIG. 1 to perform a signal transformation.
FIG. 3 is a flow diagram of a second example training process used to train the ML model to perform a signal transformation.
FIG. 4 is a block diagram of an example high-level communication system in which the neural network, once trained, may be deployed to perform inference-stage key-guided signal transformations.
FIG. 5 is a flow diagram of a first example transmitter process, performed in a transmitter of the communication system, to produce a bit-stream compatible with the ML model when trained with a non-coded input signal.
FIG. 6 is a flow diagram of a second example transmitter process, performed in the transmitter of the communication system, to produce a bit-stream compatible with the ML model when trained with a coded input signal.
FIG. 7 is a flow diagram of an example inference-stage receiver process performed in a receiver of the communication system.
FIG. 8 is a flowchart of an example method of performing a key-guided signal transformation using a neural network trained previously to be configured by key parameters to perform the signal transformation.
FIG. 9 is a block diagram of a computer device configured to implement embodiments presented herein.

### DESCRIPTION OF EXAMPLE EMBODIMENTS

### Example Embodiments

Embodiments presented herein provide key-based machine learning (ML) neural network conditioning to model time-varying signal transformations. The embodiments are directed to configuring a "key space" and signal transformation mapping for different applications based on the key space. Applications broadly range from audio signal synthesis and speech quality improvements to cryptography and authentication.

The embodiments implement at least the following high-level features:
a. Identifying a suitable key space associated with a signal transformation for an input signal, generating key parameters that uniquely represent or characterize the signal transformation and that are fixed over a period, such as a frame of the input signal, and configuring a machine learning neural network to synthesize an output signal of transformed input signal using the key parameters corresponding to the frame of the input signal. The key space associated with the signal transformation defines or contains a finite number of key parameters and a range of values for the key parameters suitable for configuring the neural network to perform the associated signal transformation.
b. During training of the neural network, adjusting or selecting a cost minimization criterion based at least on a characteristic of the frame of the input signal, a training frame, and the unique key corresponding to the frame, such that the neural network learns to be configured by the unique key to implement the signal transformation.

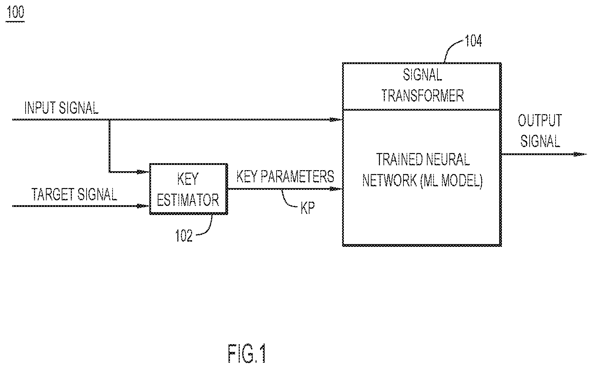

With reference to FIG. 1, there is a high-level block diagram of an example system 100 configured with a trained neural network model to perform dynamic key-guided/key-based signal transformations. System 100 is presented as a construct useful for describing concepts employed in different embodiments presented below. As such, not all of the components and signals presented in system 100 apply to all of the different embodiments, as will be apparent from the ensuing description.

System 100 includes a key generator or estimator 102 and a key-guided signal transformer 104 that may be deployed in a transmitter (TX)/receiver (RX) (TX/RX) system. In an example, key estimator 102 receives key generation data that may include at least an input signal, a target or desired signal, a transformation index or a signal transformation mapping. Based on the key generation data, the key estimator 102 generates or estimates a set of transform parameters KP, also referred to as "key parameters" KP. Key estimator 102 may estimate key parameters KP on a frame-by-frame basis, or over a group of frames, as described below. Key parameters KP parameterize or represent a desired/target signal characteristic of the target signal, such as a spectral/frequency-based characteristic or a temporal/time-based characteristic of the target signal, for example. In the TX/RX system, key parameters KP are estimated at transmitter TX and then transmitted to receiver RX along with the input signal.

At receiver RX, signal transformer 104 receives the input signal and key parameters KP transmitted by transmitter TX. Signal transformer 104 performs a desired signal transformation of the input signal based on key parameters KP, to produce an output signal having an output signal characteristic similar to or that matches the desired/target signal characteristic of the target signal.

Signal transformer 104 includes a previously trained neural network model configured to perform the desired KP-driven signal transformation. The neural network (NN) may be a convolutional neural network (CNN) that includes a series of neural network layers with convolutional filters having weights or coefficients that are configured based on a conventional stochastic gradient-based optimization algorithm. In another example, the neural network may be based on a recurrent neural network (RNN) model. In an embodiment, the neural network includes a machine learning (ML) model trained to be uniquely configured by key parameters KP to perform a dynamic key-guided signal transformation of the input signal, to produce the output signal, such that one or more output signal characteristics match or follow one or more desired/target signal characteristics. For example, key parameters KP configure the ML model of the neural network to perform the signal transformation such that spectral or temporal characteristics of the output signal match corresponding desired/target spectral or temporal characteristics of the target signal. The aforementioned processing performed by signal transformer 104 of system 100 is referred to as "inference-stage" processing because the processing is performed by the neural network of the signal transformer after the neural network has been trained.

In an example in which the input signal and the target signal include respective sequences of signal frames, e.g., respective sequences of audio frames, key estimator 102 estimates key parameters KP on a frame-by-frame basis to produce a sequence of frame-by-frame key parameters, and the ML model of the neural network of signal transformer 104 is configured by the key parameters to perform the signal transformation of the input signal to the output signal on the frame-by-frame basis. That is, the neural network produces a uniquely transformed output frame for/corresponding to each given input frame, due to the frame-specific key parameters used to guide the transformation of the given input frame. Thus, as the desired/target signal characteristics dynamically vary from frame-to-frame and the estimated key parameters that represent the desired/target signal characteristics correspondingly vary from fame-to-frame, the key-guided signal transformation will correspondingly vary frame-by-frame to cause the output frames have signal characteristics that track those of the target frames. In this way, the neural network of signal transformer 104 performs dynamic, key-guided signal transformations on the input signal, to produce the output signal that matches the target signal characteristics over time. In the ensuing description, signal transformer 104 is also referred to as "neural network" 104.

In various embodiments, the input signal may represent a pre-processed input signal that is representative of the input signal and the target signal may represent a pre-processed target signal that is representative of the target signal, such that key estimator 102 estimates key parameters KP based on the pre-processed input and target signals, and neural network 104 performs the signal transformation on the pre-processed input signal. In another embodiment, key parameters KP may represent encoded key parameters, such that the encoded key parameters configure neural network 104 to perform the signal transformation of the input signal or pre-processed input signal. Also, the input signal may represent an encoded input signal, or an encoded, pre-processed input signal, such that key estimator 102 and neural network 104 each operate on the encoded input signal or the encoded pre-processed input signal. All of these and further variations are possible in various embodiments, some of which will be described below.

By way of example, various aspects of system 100 are now described in a context in which the input signal and the target signal are respective audio signals, i.e., "input audio" and "target audio." It is understood that the embodiments presented herein apply equally to other contexts, such as a context in which the input signal and the target signal include respective radio frequency (RF) signals, image, video, and so on. In the audio context, the target signal may be a speech or audio signal sampled at, e.g., 32 kHz, and buffered, e.g., as frames of 32ms corresponding to 1024 samples per frame. Similarly, the input signal may be a speech or audio signal that is, for example:
a. Sampled at either the same sample rate as the target signal (e.g., 32 kHz) or sampled at a different sampling rate (e.g., 16 kHz, 44.1 kHz, or 48 kHz).
b. Buffered at either the same frame duration as the target signal (e.g., 32ms) or a different duration (e.g., 16ms, 20ms, or 40ms).
c. A bandlimited version of the target signal. For example, the target signal is a full-band audio signal including frequency content up to a Nyquist frequency, e.g., 16 kHz, while the input signal is bandlimited with audio frequency content that is less than that of the target signal, e.g., up to 4 kHz, 8 kHz, or 12 kHz. This "bandlimited" scenario is referred to as "Example-A."
d. A distorted version of the target signal. For example, the input signal contains unwanted noise or temporal/spectral distortions of the target signal. This "distorted" scenario is referred to as "Example-B."
e. Not perceptually or intelligibly related to the target signal. For example, the input signal includes speech/dialog, while target signal includes music; or the input signal includes music for instrument-1 while the target signal includes music from another instrument, and so on. This "perceptual" scenario is referred to as "Example-C."

In an embodiment, the input signal and the target signal may each be pre-processed to produce a pre-processed input signal and a pre-processed target signal upon which key estimator 102 and neural network 104 operate. Example pre-processing operations that may be performed on the input signal and the target signal include one or more of: resampling (e.g., down-sampling or up-sampling); direct current (DC) filtering to remove low frequencies, e.g., below 50 Hz; pre-emphasis filtering to compensate for a spectral tilt in the input signal; and/or adjusting gain such that the input signal is normalized before its subsequent signal transformation.

As mentioned above, key estimator 102 estimates key parameters KP used to guide/configure neural network 104 to perform the signal transformation on the input signal. To estimate key parameters KP, key estimator 102 may perform a variety of different analysis operations on the input signal and the target signal, to produce corresponding different sets of key parameters KP. In one example, key estimator 102 performs linear prediction (LP) analysis of at least one of the target signal, the input signal, or an intermediate signal generated based on the target and input signals. The LP analysis produces LP coefficients (LPCs) and line spectral frequencies (LSFs) that, in general, compactly represent a broader spectral envelope of the underlying signal, i.e., the target signal, the input signal, or the intermediate signal. The LSFs compactly represent the LPCs where they exhibit good quantization and frame-to-frame interpolation properties. In both Example-A and Example-B, the LSFs of the target signal (i.e., which represents a reference or ground truth) serve as a good representation for neural network 104 to learn or mimic the spectral envelope of the target signal (i.e., the target spectral envelope) and impose a spectral transformation on the spectral envelope of the input signal (i.e., the input spectral envelope) to produce a transformed signal (i.e., the output signal) that has that target spectral envelope. Thus, in this case, key parameters KP represent or form the basis for a "spectral envelope key" that includes spectral envelope key parameters. The spectral envelope key configures neural network 104 to transform the input signal to the output signal, such that the spectral envelope of the output signal (i.e., the output spectral envelope) matches or follows the target spectral envelope. In a specific non-limiting example of generating key parameters, the input signal is transformed according to a whitening filter represented by a linear prediction polynomial with LPC order L=2 (e.g., a 2-pole filter), to produce an output signal. LPCs for the linear prediction polynomial are estimated during training, to achieve estimated LPCs that drive the output signal to match the target signal (e.g., based on any of various error/loss functions associated with the desire for whitening of the input signal). Then, the estimated LPCs are converted to LSFs (ranging from 0 to pi) and quantized using a 6-bit scalar quantizer per LSF to generate key parameters. The 6-bit scalar quantizer yields a total of 12-bits or 4096 possible combinations of unique keys; however, in this example, there are 2 keys corresponding to the 2 pole locations.

In another example, key estimator 102 performs frequency harmonic analysis of at least one of the target signal, the input signal, or an intermediate signal generated based on the target and input signals. The harmonic analysis generates as key parameters KP a representation of a subset of dominant tonal harmonics that are, e.g., present in the target signal and are in/missing from the input signal. Key estimator 102 estimates the dominant tonal harmonics using, e.g., a search on spectral peaks, or a sinusoidal analysis/synthesis algorithm. In this case, key parameters KP represent or form the basis of a "harmonic key" comprising harmonic key parameters. The harmonic key configures neural network 104 to transform the input signal to the output signal, such that the output signal includes the spectral features that are present in the target signal, but absent from the input signal. In this case, the signal transformation may represent a signal enhancement of the input signal to produce the output signal with perceptually-improved signal quality, which may include frequency bandwidth extension (BWE), for example. The above-described LP analysis that produces LSFs and harmonic analysis are each examples of spectral analysis.

According to the invention, key estimator 102 performs temporal analysis (i.e., time-domain analysis) of at least one of the target signal, or an intermediate signal generated based on the target and input signals. The temporal analysis produces key parameters KP as parameters that compactly represent temporal evolution in a given frame (e.g., gain variations), or a broad temporal envelope of either the target signal or the intermediate signal (generally referred to as "temporal amplitude" characteristics), for example. In both the bandlimited Example-A and distorted Example-B, the temporal features of the target signal (i.e., the reference or ground truth) serve as a good prototype for neural network 104 to learn or mimic the temporal fine structure of the target signal (i.e., the desired temporal fine structure) and impose this temporal feature transformation on the input signal. In this case, key parameters KP represent or form the basis for a "temporal key" comprising temporal key parameters. The temporal key configures neural network 104 to transform the input signal to the output signal such that the output signal has the desired temporal envelope.

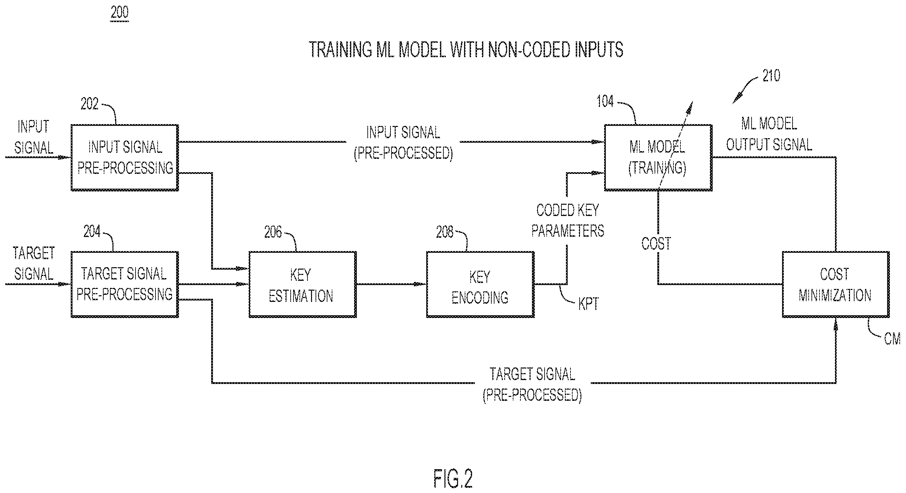

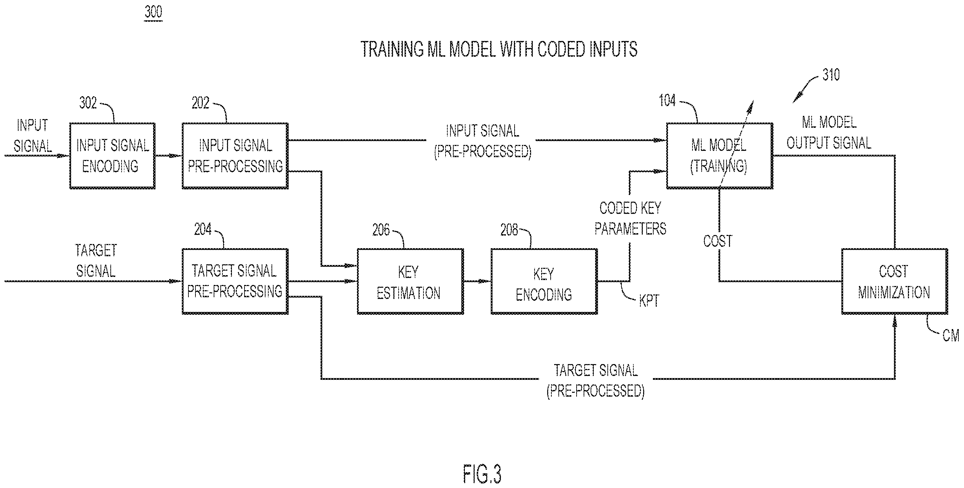

The above-described key estimation/generation and inference-stage processing relies on a trained ML model of the neural network 104. Various processes employed to train the ML model of neural network 104 to perform dynamic key-guided signal transformations are described below in connection with FIGs. 2 and 3. With reference to FIG. 2, there is a flow diagram of a first example training process 200 that employs various training signals to train the ML model. The training signals include a training input signal (e.g., training input audio), a training target signal (e.g., training target audio), and training key parameters that have signal characteristics/properties generally similar to the input signal, the target signal, and key parameters KP used for inference-stage processing in system 100, for example; however, the training signals and the inference-stage signals are not the same signals. In the example of FIG. 2, training process 200 trains the ML model using a non-coded version of the input signal. Also, training process 200 operates on a frame-by-frame basis, i.e., the training process operates on each frame of the input signal and corresponding concurrent frame of the target signal

At 202, the training process pre-processes an input signal frame to produce a pre-processed input signal frame. Example input signal pre-processing operations include resampling; DC filtering to remove low frequencies, e.g., below 50 Hz; pre-emphasis filtering to compensate for a spectral tilt in the input signal; and/or adjusting gain such that the input signal is normalized before a subsequent signal transformation. Similarly, at 204, the training process pre-processes the corresponding target signal frame, to produce a pre-processed target signal frame. The target signal pre-processing may perform all or a subset of the operations performed by the pre-processing of the input signal.

At 206, the training process estimates for the input signal frame a corresponding set of key parameters that are to guide a subsequent signal transformation of the (pre-processed) input signal frame. To estimate the key parameters, the training system performs analysis operations on the input signal frame, and the corresponding target signal frame, to produce corresponding different sets of the key parameters, in the manner described above in connection with the key estimation/generation and inference-stage processing. The training system performs the above-described temporal analysis of at least one of the input signal frame, the corresponding target signal frame, and an intermediate signal frame based on the input signal frame and the corresponding target signal frame, to produce a temporal key, respectively, for the input signal frame.

At 208, the training system encodes the key parameters to produce encoded key parameters KPT, i.e., an encoded version of the key parameters for the input signal frame. Encoding of the key parameters may include, but not be limited to, quantizing at least one or a subset of the key parameters, and encoding the key parameters using scalar or vector quantizer codebooks.

At 210, the ML model of neural network 104 receives the pre-processed input signal frame and the encoded key parameters KPT for the input signal frame. In addition, the pre-processed target signal frame is provided to a cost minimizer CM employed for training. Encoded key parameters KPT configure the ML model to perform a signal transformation on the pre-processed input signal frame, to produce an output signal frame. Cost minimizer CM implements a loss function to generate a current cost/error based on differences or similarity between the output signal frame and the target signal frame. The error may represent a deviation of a desired signal characteristic of the target signal frame from a corresponding signal characteristic of the input signal frame. Weights of the ML model are updated/trained based on the error to reduce the deviation using, e.g., any known or hereafter developed back propagation technique to update the weights of a neural network to minimize a loss function. The loss function may be implemented using any known or hereafter developed techniques for implementing a loss function to be used for training an ML model. For example, the loss function implementation may include estimating mean-squared error (MSE) or absolute error between the target signal and the model output signal produced by the signal transformer (model). The target signal and the model output signal may be in the time domain, the spectral domain, or in key parameter domain. The domain here corresponds to the representation of the target and model output signals, where the spectral domain corresponds to the frequency-domain (e.g., Discrete-Fourier Transform (DFT)) representation of the signals, and the key parameter domain corresponds to the parametric representation (e.g., linear prediction coefficients, tonality, spectral-tilt factor, prediction gain that are known to those skilled in the art) of the signals (e.g., LPCs, tonality, spectral-tilt factor, and/or prediction gain) that are known to those skilled in the art. In another example embodiment, the loss function may be implemented as a weighted combination of multiple errors estimated in the time-domain, the spectral domain, and/or the key parameter domain.

Operations 202-210 repeat for successive input and corresponding target signal frames to cause the key parameters to configure the ML model over time to perform the signal transformation on the input signal such that the output signal characteristic of the output signal matches the target signal characteristic targeted by the signal transformation. Once the ML model has been trained over many frames of the input signal, the trained ML model (i.e., the trained ML model of neural network 104) may be deployed for inference-stage processing of an (inference-stage) input signal based on (inference-stage) key parameters.

With reference to FIG. 3, there is a flow diagram of a second example training process 300 used to train the ML model. Training process 300 is similar to training process 200, except that training process 300 trains the ML model using a coded version of the input signal. The above description of operations 202-208, generally common to both training process 200 and 300, shall suffice for the description of their corresponding functions in training process 300, and thus will not be repeated; however, training process 300 includes an additional encoding operation 302. Encoding operation 302 encodes the input signal to produce an encoded input signal. Encoding operation 302 may encode the input signal using any known or hereafter developed waveform preserving audio compression technique. Signal pre-processing operation 202 then performs its pre-processing on the encoded input signal, to produce an encoded, pre-processed input signal. Signal pre-processing operation 202 provides the encoded pre-processed input signal to the ML model for training operation 310, which proceeds in similar fashion to operation 210.

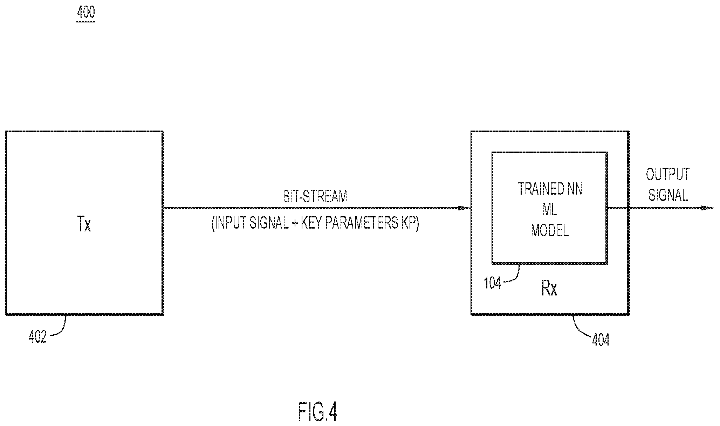

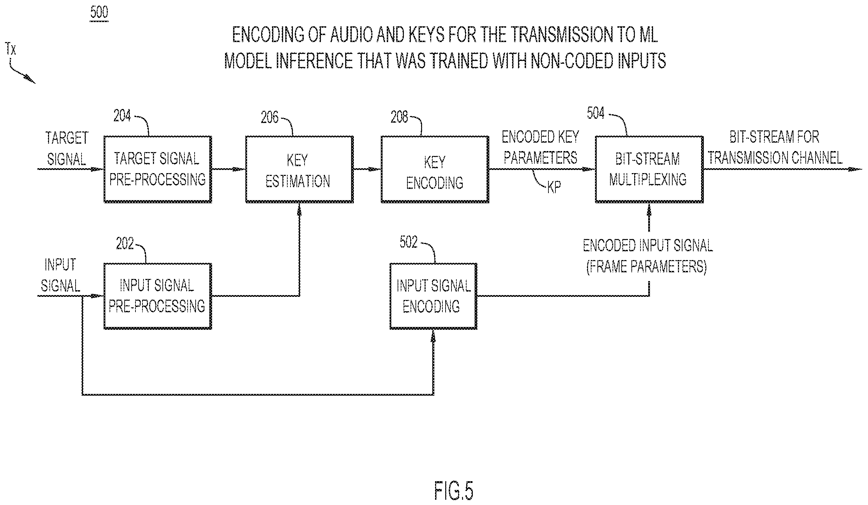

With reference to FIG. 4, there is a block diagram of an example high-level communication system 400 in which trained neural network 104 may be deployed to perform inference-stage key-guided signal transformations. Communication system 400 includes a transmitter (TX) 402, in which key estimator 102 may be deployed, and a receiver (RX) 404, in which trained neural network 104 is deployed. At a high-level, transmitter 402 generates a bit-stream including an input signal to and key parameters (e.g., key parameters KP) to guide a transformation of the input signal, and transmits the bit-stream over a communication channel. Receiver 404 receives the bit-stream from the communication channel, and recovers the input signal and the key parameters from the bit-stream. Trained neural network 104 of receiver 404, performs its inference processing and transforms the input signal recovered from the bit stream based on key parameters recovered from the bit stream, to produce an output signal. Key estimation/generation and inference-stage processing performed in transmitter 402 and receiver 404 are described below in connection with FIGs. 5-7.

With reference to FIG. 5, there is a flow diagram of a first example transmitter process 500 performed by transmitter 402 to produce a bit-stream compatible with the ML model of neural network 104 trained previously with a non-coded input signal, e.g., trained according to training process 200. Transmitter process 500 operates on a full set of signals, e.g., input signal, target signal, and key parameters KP, that have similar statistical characteristics as the corresponding training signals of training process 200. Also, transmitter process 500 employs many of the operations employed by training process 200. The above description of operations 202-208, generally common to both training process 200 and transmitter process 500, shall suffice for the transmitter process, and thus will not be repeated in detail.

Transmitter process 500 includes operations 202 and 204 to provide to key estimating operation 206 a pre-processed input signal and a pre-processed target signal, respectively. Next, key estimating operation 206 and key encoding operation 208 collectively generate encoded key parameters KP from the pre-processed input and target signals. Next, an encoding operation 502 encodes the input signal to produce an encoded/compressed input signal. Finally, a bit-stream multiplexing operation 504 multiplexes the encoded input signal and the encoded key parameters into the bit-stream (i.e., a multiplexed signal) for transmission by transmitter 402 over the communication channel.

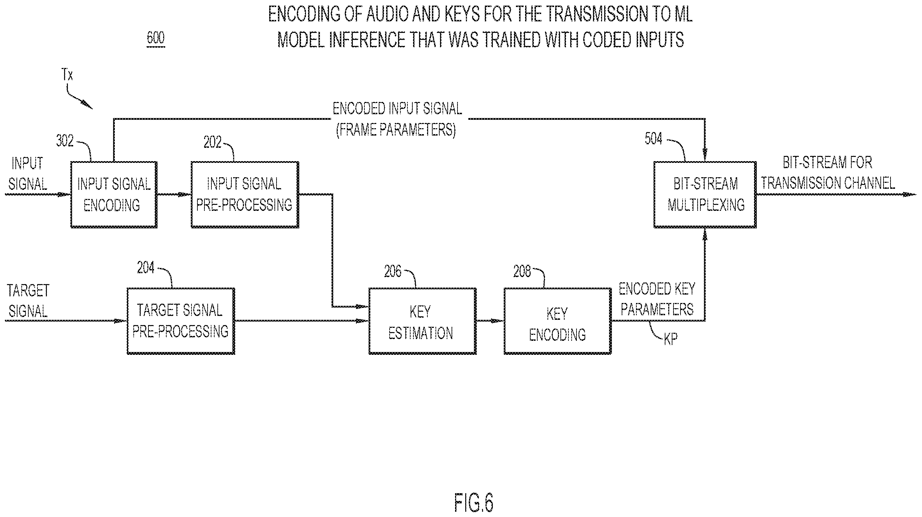

With reference to FIG. 6, there is a flow diagram of a second example transmitter process 600 performed by transmitter 402 to produce a bit-stream compatible with the ML model of neural network 104 trained with a coded input signal, e.g., trained according to training process 300. Transmitter process 600 operates on a full set of signals that have similar statistical characteristics as the training signals of training process 300. In addition, transmitter process 600 employs many of the operations employed by training process 300. The above description of operations 202-208 and 302, generally common to both training process 300 and transmitter process 600, shall suffice for the transmitter process, and thus will not be repeated in detail.

Transmitter process 600 includes operations 302 and 202 that collectively provide to both key estimating operation 206 and bit-stream multiplexing operation 504 an encoded pre-processed input signal. Also, operation 204 provides a pre-processed target signal to key estimating operation 206. Next, key generating operations 206 and 208 collectively generate encoded key parameters KP based on the encoded pre-processed input signal and the pre-processed target signal. Finally, bit-stream multiplexing operation 504 multiplexes the encoded input signal and the encoded key parameters into the bit-stream for transmission by transmitter 402 over the communication channel.

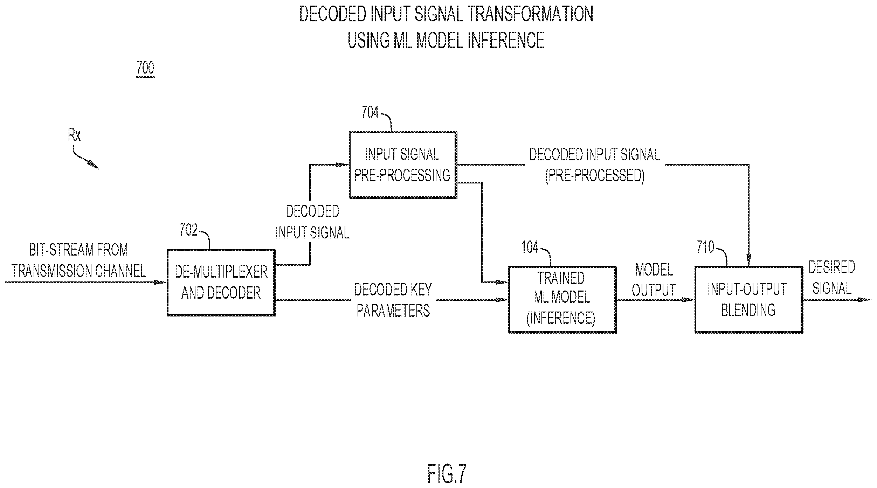

With reference to FIG. 7, there is a flow diagram of an example inference-stage receiver process 700 performed by receiver 404. Receiver process 700 receives the bit-stream transmitted by transmitter 402. Receiver process 700 includes a demultiplexer-decoder operation 702 (also referred to simply as a "decoder" operation) to demultiplex and decode the encoded input signal and the encoded key parameters from the bit-stream, to recover local copies/versions of the input signal and the key parameters (respectively labeled as "decoded input signal" and "decoded key parameters" in FIG. 7).

Next, an optional input signal pre-processing operation 704 pre-processes the input signal from bit-stream demultiplexer-decoder operation 702, to produce a pre-processed version of the input signal that is representative of the input signal. Based on the key parameters, the ML model of neural network 104 performs a desired signal transformation on the pre-processed version of the input signal, to produce an output signal (labeled "model output" in FIG. 7). In an embodiment that omits pre-processing input signal pre-processing operation 704, the ML model of neural network 104 performs the desired signal transformation on the input signal, directly. The processed version of the input signal and the input signal may each be referred to more generically as "a signal that is representative of the input signal."

Receiver process 700 may also include an input-output blending operation 710 to blend the pre-processed input signal with the output signal. Input-output blending operation 710 may include one or more of the following operations performed on a frame-by-frame basis:
a. A constant-overlap-add (COLA) windowing, for example, with 50% hop and overlap-add of two consecutive windowed frames.
b. Blending of windowed/filtered versions of the output signal and the pre-processed input signal to generate the desired signal, the goal of the blending being to control characteristics of the desired signal in a region of spectral overlap between the output signal and the pre-processed input signal. Blending may also include post-processing of the output signal based on the key parameters to control the overall tonality and noisiness in the output signal.

In summary, process 700 includes (i) receiving input audio and key parameters representative of a target audio characteristic, and (ii) configuring neural network 104, that was previously trained to be configured by the key parameters, with the key parameters to cause the neural network to perform a signal transformation of audio representative of the input audio (e.g., either the input audio or a pre-processed version of the input audio), to produce output audio with an output audio characteristic that matches the target audio characteristic. The key parameters may represent a target spectral characteristic as the target audio characteristic, and the configuring includes configuring neural network 104 with the key parameters to cause the neural network to perform the signal transformation of an input spectral characteristic of the input audio to an output spectral characteristics of the output audio that matches the target spectral characteristic.

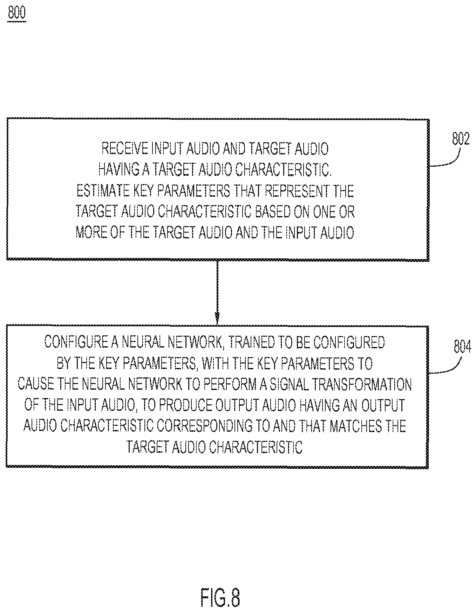

With reference to FIG. 8, there is a flowchart of an example method 800 of performing a key-guided signal transformation using a neural network (e.g., neural network 104) trained previously to be configured by key parameters to perform the signal transformation, i.e., to perform the signal transformation based on the key parameters.

At 802, a key estimator receives input audio and target audio having a target audio characteristic. The input audio and target audio may each include a sequence of audio frames. The key estimator estimates key parameters that represent the target audio characteristic based on one or more of the target audio and the input audio. The key estimator may perform spectral and/or temporal analysis of the input and target audio to produce the key parameters, as described above. The key estimator may estimate the key parameters on a frame-by-frame basis to produce a sequence of frame-by-frame key parameters. The key estimator provides the key parameters to a first input of the trained neural network.

At 804, the trained neural network also receives the input audio at a second input of the neural network. The key parameters configure the trained neural network to perform a desired signal transformation. Responsive to the key parameters, the trained neural network performs the desired signal transformation of the input audio (i.e., of an input audio characteristic of the input audio), to produce output audio having an output audio characteristic that matches the target audio characteristic. That is, the signal transformation transforms the input audio characteristic to the output audio characteristic that matches or is similar to the target audio characteristic. The trained neural network may be configured by the sequence of frame-by-frame key parameters on a frame-by-frame basis to transform each input audio frame to a corresponding output audio frame, to produce the output audio as a sequence of output audio frames (one output audio frame per one input audio frame and per set of frame-by-frame key parameters).

During an a priori training stage, the neural network was trained to perform the signal transformation so as to minimize an error between the output audio and the target audio. For example, the neural network was trained by training weights of the neural network to cause the neural network to perform a signal transformation of training input audio to produce training output audio responsive to training key parameters, so as to minimize the error.

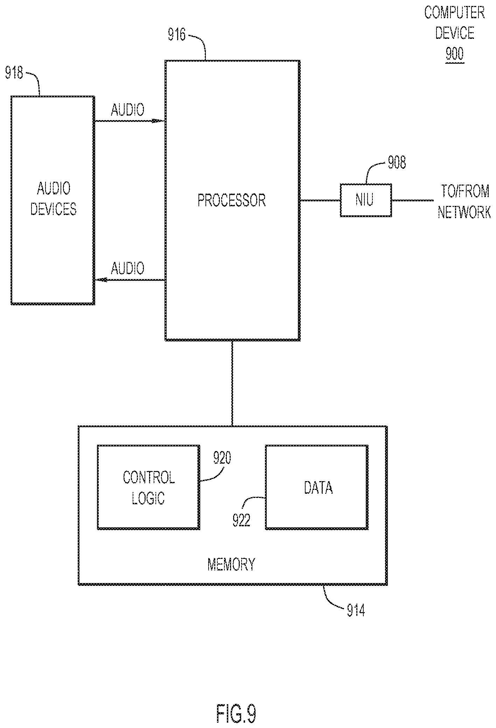

With reference to FIG. 9, there is a block diagram of a computer device 900 configured to implement embodiments presented herein. There are numerous possible configurations for computer device 900 and FIG. 9 is meant to be an example. Examples of computer device 900 include a tablet computer, a personal computer, a laptop computer, a mobile phone, such as a smartphone, and so on. Computer device 900 includes one or more network interface units (NIUs) 908, and memory 914 each coupled to a processor 916. The one or more NIUs 908 may include wired and/or wireless connection capability that allows processor 916 to communicate over a communication network. For example, NIUs 908 may include an Ethernet card to communicate over an Ethernet connection, a wireless RF transceiver to communicate wirelessly with cellular networks in the communication network, optical transceivers, and the like, as would be appreciated by one of ordinary skill in the relevant arts. Processor 916 receives sampled or digitized audio, and provides digitized audio to, one or more audio devices 918, as is known. Audio devices 918 may include microphones, loudspeakers, analog-to-digital converters (ADCs), and digital-to-analog converters (DACs).

Processor 916 may include a collection of microcontrollers and/or microprocessors, for example, each configured to execute respective software instructions stored in the memory 914. Processor 916 may implement an ML model of a neural network. Processor 916 may be implemented in one or more programmable application specific integrated circuits (ASICs), firmware, or a combination thereof. Portions of memory 914 (and the instructions therein) may be integrated with processor 916. As used herein, the terms "acoustic," "audio," and "sound" are synonymous and interchangeable.

The memory 914 may include read only memory (ROM), random access memory (RAM), magnetic disk storage media devices, optical storage media devices, flash memory devices, electrical, optical, or other physical/tangible (e.g., non-transitory) memory storage devices. Thus, in general, the memory 914 may comprise one or more computer readable storage media (e.g., a memory device) encoded with software comprising computer executable instructions and when the software is executed (by the processor 916) it is operable to perform the operations described herein. For example, the memory 914 stores or is encoded with instructions for control logic 920 to implement modules configured to perform operations described herein related to the ML model of the neural network, the key estimator, input/target signal pre-processing, input signal and key encoding and decoding, cost minimization, bit-stream multiplexing and demultiplexing, input-output blending (post-processing), and the methods described above.

In addition, memory 914 stores data/information 922 used and generated by processor 916, including key parameters, input audio, target audio, and output audio, and coefficients and weights employed by the ML model of the neural network.

In summary, in one embodiment, a method is provided according to claim 1.

In another embodiment, an apparatus is provided according to claim 7.

In a further embodiment, a method is provided according to claim 13.

Although the techniques are illustrated and described herein as embodied in one or more specific examples, it is nevertheless not intended to be limited to the details shown, since various modifications and structural changes may be made within the scope of the claims.

Each claim presented below represents a separate embodiment, and embodiments that combine different claims and/or different embodiments are within the scope of the disclosure and will be apparent to those of ordinary skill in the art after reviewing this disclosure.

## Claims

1. A method comprising:
receiving input audio and target audio having a target audio characteristic, wherein the input audio and the target audio are received as separate signals;
estimating key parameters that represent the target audio characteristic based on one or more of the target audio and the input audio; and
configuring a neural network, trained to be configured by the key parameters, with the key parameters to cause the neural network to perform a signal transformation of the input audio, to produce output audio having an output audio characteristic corresponding to and that matches the target audio characteristic, wherein
the estimating includes performing a temporal analysis to produce, as the key parameters, temporal key parameters that represent a target temporal characteristic of the target audio; and
the configuring includes configuring the neural network with the temporal key parameters to cause the neural network to perform the signal transformation as a transformation of a temporal characteristic of the input audio to a temporal characteristic of the output audio that matches the target temporal characteristic.

2. The method of claim 1, wherein the target temporal characteristic and the temporal characteristic of the output audio are each a respective temporal amplitude characteristic.

3. The method of claim 1, wherein the estimating key parameters includes
estimating as temporal key parameters temporal key parameters that represent a temporal amplitude characteristic of the target audio; and wherein the estimating further includes at least one of
spectral envelope key parameters including LP coefficients (LPCs) or line spectral frequencies (LSFs) representative of a target spectral envelope of the target audio; and
harmonic key parameters that represent harmonics present in the target audio.

4. The method of claim 1, wherein:
the input audio and the target audio include respective sequences of audio frames;
the estimating the key parameters includes estimating the key parameters on a frame-by-frame basis; and
the configuring the neural network includes configuring the neural network with key parameters estimated on the frame-by-frame basis to cause the neural network to perform the signal transformation on a frame-by-frame basis, to produce the output audio as a sequence of audio frames.

5. The method of claim 1, wherein the input audio includes encoded input audio.

6. The method of claim 1, wherein the key parameters include encoded key parameters.

7. An apparatus comprising:
a decoder to decode encoded input audio and encoded key parameters in a bit stream from a transmission channel, to produce input audio and key parameters, respectively; and
a neural network trained to be configured by the key parameters as produced by the decoder to perform a signal transformation of audio representative of the input audio, to produce output audio; wherein:
the key parameters represent a target temporal audio characteristic as the target audio characteristic; and
the neural network is trained to be configured by the key parameters to perform the signal transformation of an input temporal audio characteristic of the input audio to an output temporal audio characteristic of the output audio that matches the target temporal audio characteristic.

8. The apparatus of claim 7, wherein:
the audio representative of the input audio includes a sequence of audio frames;
the key parameters include a sequence of frame-by-frame key parameters that represent the target audio characteristic on a frame-by-frame basis; and
the neural network is configured by the sequence of frame-by-frame key parameters to perform the signal transformation of the audio representative of the input audio on a frame-by-frame basis, to produce the output audio as a sequence of output audio frames.

9. The apparatus of claim 7, further comprising a pre-processor to pre-process the input audio to produce pre-processed input audio as the audio representative of the input audio.

10. The apparatus of claim 7, wherein the audio representative of the input audio includes the input audio.

11. The apparatus of claim 7, wherein the decoder is further configured to demultiplex the encoded input audio and the encoded key parameters from a multiplexed signal, and then perform the decode of the encoded input audio and the encoded key parameters.

12. The apparatus of claim 7, further comprising:
a blending unit providing a blending operation to blend the decoded input signal with the output audio produced by the neural network.

13. A method comprising:
receiving input audio and key parameters representative of a target audio characteristic in a multiplexed and coded bit stream in which both the input audio and the key parameters are encoded;
demultiplexing and decoding the encoded input audio and the encoded key parameters to recover the input audio and the key parameters; and
configuring a neural network, that was previously trained to be configured by the key parameters, with the key parameters as decoded to cause the neural network to perform a signal transformation of audio representative of the input audio, to produce output audio with an output audio characteristic that matches the target audio characteristic, wherein:
the key parameters represent a target temporal audio characteristic as the target audio characteristic; and
the neural network is trained to be configured by the key parameters to perform the signal transformation of an input temporal audio characteristic of the input audio to an output temporal audio characteristic of the output audio that matches the target temporal audio characteristic.

14. The method of claim 13, wherein:
the input audio and the audio include respective sequences of audio frames;
the key parameters represent the target audio characteristic on a frame-by-frame basis; and
the neural network is configured by the key parameters to perform the signal transformation on a frame-by-frame basis, to produce the output audio as a sequence of output audio frames.

15. The method of claim 13, further comprising pre-processing the input audio to produce pre-processed input audio as the audio.

## Patentansprüche

1. Verfahren, umfassend:
Empfangen von Eingangsaudio und Zielaudio mit einer Audio-Zielcharakteristik, wobei das Eingangsaudio und das Zielaudio als getrennte Signale empfangen werden;
Schätzen von Schlüsselparametern, welche die Audio-Zielcharakteristik darstellen, basierend auf einem oder mehreren von dem Zielaudio und dem Eingangsaudio; und
Konfigurieren eines neuronalen Netzes, das dafür trainiert ist, durch die Schlüsselparameter konfiguriert zu werden, wobei die Schlüsselparameter das neuronale Netz veranlassen, eine Signaltransformation des Eingangsaudios durchzuführen, um Ausgangsaudio zu erzeugen, das eine Audio-Ausgangscharakteristik aufweist, die der Audio-Zielcharakteristik entspricht und mit dieser übereinstimmt, wobei
das Schätzen das Durchführen einer temporären Analyse beinhaltet, um, wie die Schlüsselparameter, temporäre Schlüsselparameter zu erzeugen, die eine temporäre Zielcharakteristik des Zielaudios darstellen; und
das Konfigurieren das Konfigurieren des neuronalen Netzes mit den temporären Schlüsselparametern beinhaltet, um das neuronale Netz zu veranlassen, die Signaltransformation als eine Transformation einer temporären Charakteristik des Eingangsaudios zu einer temporären Charakteristik des Ausgangsaudios durchzuführen, die mit der temporären Zielcharakteristik übereinstimmt.

2. Verfahren nach Anspruch 1, wobei die temporäre Zielcharakteristik und die temporäre Charakteristik des Ausgangsaudios jeweils eine entsprechende temporäre Amplitudencharakteristik sind.

3. Verfahren nach Anspruch 1, wobei das Schätzen von Schlüsselparametern umfasst:
Schätzen, als temporäre Schlüsselparameter, von temporären Schlüsselparametern, die eine temporäre Amplitudencharakteristik des Zielaudios darstellen; und
wobei das Schätzen ferner wenigstens eines hiervon beinhaltet:
Spektralhüllkurven-Schlüsselparameter, die LP-Koeffizienten (LP Coefficients, LPCs) oder Linienspektralfrequenzen (Line Spectral Frequencies, LSFs) aufweisen, welche für eine Spektralzielhüllkurve des Zielaudios repräsentativ sind; und
harmonische Schlüsselparameter, die Oberschwingungen (Harmonische) im Zielaudio darstellen.

4. Verfahren nach Anspruch 1, wobei:
das Eingangsaudio und das Zielaudio jeweilige Sequenzen von Audiorahmen beinhalten;
das Schätzen der Schlüsselparameter das Schätzen der Schlüsselparameter auf Rahmen-für-Rahmen-Basis beinhaltet; und
das Konfigurieren des neuronalen Netzes das Konfigurieren des neuronalen Netzes mit auf Rahmen-für-Rahmen-Basis geschätzten Schlüsselparametern beinhaltet, um das neuronale Netz zu veranlassen, die Signaltransformation auf Rahmen-für-Rahmen-Basis durchzuführen, um das Ausgangsaudio als Sequenz von Audiorahmen zu erzeugen.

5. Verfahren nach Anspruch 1, wobei das Eingangsaudio codiertes Eingangsaudio beinhaltet.

6. Verfahren nach Anspruch 1, wobei die Schlüsselparameter codierte Schlüsselparameter beinhalten.

7. Einrichtung, umfassend:
einen Decoder zum Decodieren von codiertem Eingangsaudio und codierten Schlüsselparametern in einem Bitstrom von einem Übertragungskanal, um Eingangsaudio bzw. Schlüsselparameter zu erzeugen; und
ein neuronales Netz, das dafür trainiert ist, durch die Schlüsselparameter konfiguriert zu werden, so wie sie von dem Decoder erzeugt werden, um eine Signaltransformation von Audio durchzuführen, das für das Eingangsaudio repräsentativ ist, um Ausgangsaudio zu erzeugen; wobei:
die Schlüsselparameter eine temporäre Audio-Zielcharakteristik als die Audio-Zielcharakteristik repräsentieren; und
das neuronale Netz dafür trainiert ist, durch die Schlüsselparameter konfiguriert zu werden, um die Signaltransformation einer temporären Audio-Eingangscharakteristik des Eingangsaudios zu einer temporären Audio-Ausgangscharakteristik des Ausgangsaudios durchzuführen, die mit der temporären Audio-Zielcharakteristik übereinstimmt.

8. Einrichtung nach Anspruch 7, wobei:
das für das Eingangsaudio repräsentative Audio eine Sequenz von Audiorahmen beinhaltet;
die Schlüsselparameter eine Sequenz von Rahmen-für-Rahmen-Parametern beinhaltet, welche die Audio-Zielcharakteristik auf einer Rahmen-für-Rahmen-Basis repräsentieren; und
das neuronale Netz durch die Sequenz von Rahmen-für-Rahmen-Schlüsselparametern dafür konfiguriert ist, die Signaltransformation des Audios, welches für das Eingangsaudio repräsentativ ist, auf Rahmen-für-Rahmen-Basis durchzuführen, um das Ausgangsaudio als eine Sequenz von Audio-Ausgangsrahmen zu erzeugen.

9. Einrichtung nach Anspruch 7, ferner umfassend einen Präprozessor zum Vorverarbeiten des Eingangsaudios, um vorverarbeitetes Eingangsaudio als das Audio zu erzeugen, das für das Eingangsaudio repräsentativ ist.

10. Einrichtung nach Anspruch 7, wobei das Audio, das für das Eingangsaudio repräsentativ ist, das Eingangsaudio beinhaltet.

11. Einrichtung nach Anspruch 7, wobei der Decoder ferner dafür konfiguriert ist, das codierte Eingangsaudio und die codierten Schlüsselparameter aus einem Multiplexsignal zu demultiplexen und dann die Decodierung des codierten Eingangsaudios und der codierten Schlüsselparameter durchzuführen.

12. Einrichtung nach Anspruch 7, ferner umfassend:
eine Mischeinheit, die eine Mischoperation bereitstellt, um das decodierte Eingangssignal mit dem vom neuronalen Netz erzeugten Ausgangsaudio zu mischen.

13. Verfahren, umfassend:
Empfangen von Eingangsaudio und Schlüsselparametern, die für eine Audio-Zielcharakteristik repräsentativ sind, in einem gemultiplexten und codierten Bitstrom, in dem sowohl das Eingangsaudio als auch die Schlüsselparameter codiert sind;
Demultiplexen und Decodieren des codierten Eingangsaudios und der codierten Schlüsselparameter, um das Eingangsaudio die Schlüsselparameter wiederherzustellen; und
Konfigurieren eines neuronalen Netzes, das zuvor dafür trainiert wurde, durch die Schlüsselparameter konfiguriert zu werden, mit den Schlüsselparametern so wie decodiert, um das neuronale Netz zu veranlassen, eine Signaltransformation von Audio durchzuführen, das für das Eingangsaudio repräsentativ ist, um Ausgangsaudio mit einer Audio-Ausgangscharakteristik zu erzeugen, die mit der Audio-Zielcharakteristik übereinstimmt, wobei:
die Schlüsselparameter eine temporäre Audio-Zielcharakteristik als die Audio-Zielcharakteristik repräsentieren; und
das neuronale Netz dafür trainiert ist, durch die Schlüsselparameter konfiguriert zu werden, um die Signaltransformation einer temporären Audio-Eingangscharakteristik des Eingangsaudios zu einer temporären Audio-Ausgangscharakteristik des Ausgangsaudios durchzuführen, die mit der temporären Audio-Zielcharakteristik übereinstimmt.

14. Verfahren nach Anspruch 13, wobei:
das Eingangsaudio und das Zielaudio jeweilige Sequenzen von Audiorahmen beinhalten;
die Schlüsselparameter die Audio-Zielcharakteristik auf einer Rahmen-für-Rahmen-Basis darstellen; und
das neuronale Netz dafür ausgelegt ist, durch die Schlüsselparameter konfiguriert zu werden, um die Signaltransformation auf einer Rahmen-für-Rahmen-Basis durchzuführen, um das Ausgangsaudio als Sequenz von Audio-Ausgangsrahmen zu erzeugen.

15. Verfahren nach Anspruch 13, ferner umfassend das Vorverarbeiten des Eingangsaudios, um vorverarbeitetes Eingangsaudio als Audio zu erzeugen.

## Revendications

1. Procédé comprenant les étapes suivantes :
recevoir un signal audio d'entrée et un signal audio cible présentant une caractéristique audio cible, le signal audio d'entrée et le signal audio cible étant reçus en tant que signaux distincts ;
estimer des paramètres clés qui représentent la caractéristique audio cible sur la base des un ou plusieurs signaux parmi le signal audio cible et le signal audio d'entrée ; et
configurer un réseau neuronal, entraîné à être configuré par les paramètres clés, avec les paramètres clés pour amener le réseau neuronal à effectuer une transformation du signal audio d'entrée afin de produire le signal audio de sortie ayant une caractéristique audio de sortie correspondant et en accord avec la caractéristique audio cible, où :
l'estimation comprend l'exécution d'une analyse temporelle pour produire, en tant que paramètres clés, des paramètres clés temporels qui représentent une caractéristique temporelle cible du signal audio cible ; et
la configuration comprend de configurer le réseau neuronal avec les paramètres clés temporels pour amener le réseau neuronal à exécuter la transformation du signal en tant que transformation d'une caractéristique temporelle du signal d'entrée en une caractéristique temporelle du signal audio de sortie qui correspond à la caractéristique temporelle cible.

2. Procédé selon la revendication 1, dans lequel la caractéristique temporelle cible et la caractéristique temporelle du signal audio de sortie sont chacune une caractéristique d'amplitude temporelle respective.

3. Procédé selon la revendication 1, dans lequel l'estimation des paramètres clés comprend les étapes suivantes :
estimer, en tant que paramètres clés temporels, des paramètres clés temporels qui représentent une caractéristique d'amplitude temporelle du signal audio cible ; et où l'estimation comprend en outre au moins l'un des éléments suivants :
des paramètres clés d'enveloppe spectrale comprenant des coefficients LP (LPC) ou des fréquences spectrales de ligne (LSF) représentatifs d'une enveloppe spectrale cible du signal audio cible ; et
des paramètres clés harmoniques qui représentent les harmoniques présentes dans le signal audio cible.

4. Procédé selon la revendication 1, dans lequel :
le signal audio d'entrée et le signal audio cible comprennent des séquences respectives de trames audio ;
l'estimation des paramètres clés comprend d'estimer les paramètres clés trame par trame ; et
la configuration du réseau neuronal comprend de configurer le réseau neuronal avec les paramètres clés estimés trame par trame pour amener le réseau neuronal à effectuer la transformation du signal trame par trame, afin de produire le signal audio de sortie sous la forme d'une séquence de trames audio.

5. Procédé selon la revendication 1, dans lequel le signal audio d'entrée comprend le signal audio d'entrée codé.

6. Procédé selon la revendication 1, dans lequel les paramètres clés comprennent des paramètres clés codés.

7. Appareil comprenant :
un décodeur pour décoder le signal audio d'entrée codé et les paramètres clés codés dans un flux binaire provenant d'un canal de transmission afin de produire un signal audio d'entrée et des paramètres clés, respectivement ; et
un réseau neuronal entraîné à être configuré par les paramètres clés produits par le décodeur pour effectuer une transformation du signal audio représentatif du signal audio d'entrée, afin de produire le signal audio de sortie ;
où :
les paramètres clés représentent une caractéristique audio temporelle cible en tant que caractéristique audio cible ; et
le réseau neuronal est entraîné pour être configuré par les paramètres clés afin d'effectuer la transformation du signal d'une caractéristique audio temporelle d'entrée du signal audio d'entrée en une caractéristique audio temporelle de sortie du signal audio de sortie qui correspond à la caractéristique audio temporelle cible.

8. Appareil selon la revendication 7, dans lequel :
le signal audio représentatif du signal audio d'entrée comprend une séquence de trames audio ;
les paramètres clés comprennent une séquence de paramètres clés trame par trame qui représentent la caractéristique audio cible trame par trame ; et
le réseau neuronal est configuré par la séquence de paramètres clés trame par trame pour effectuer la transformation de signal de l'audio représentatif du signal audio d'entrée trame par trame, afin de produire le signal audio de sortie sous la forme d'une séquence de trames audio de sortie.

9. Appareil selon la revendication 7, comprenant en outre un préprocesseur pour prétraiter le signal audio d'entrée afin de produire un signal audio d'entrée prétraité en tant que signal audio représentatif du signal audio d'entrée.

10. Appareil selon la revendication 7, dans lequel le signal audio représentatif du signal audio d'entrée comprend le signal audio d'entrée.

11. Appareil selon la revendication 7, dans lequel le décodeur est en outre configuré pour démultiplexer le signal audio d'entrée codé et les paramètres clés codés à partir d'un signal multiplexé, puis pour effectuer le décodage du signal audio d'entrée codé et des paramètres clés codés.

12. Appareil selon la revendication 7, comprenant en outre :
une unité de mélange fournissant une opération de mélange pour mélanger le signal d'entrée décodé avec le signal audio de sortie produit par le réseau neuronal.

13. Procédé comprenant les étapes suivantes :
recevoir un signal audio d'entrée et des paramètres clés représentatifs d'une caractéristique audio cible dans un flux binaire multiplexé et codé dans lequel à la fois le signal audio d'entrée et les paramètres clés sont codés ;
démultiplexer et décoder le signal audio d'entrée codé et des paramètres clés codés pour récupérer le signal audio d'entrée et les paramètres clés ; et
configurer un réseau neuronal, préalablement entraîné à être configuré par les paramètres clés, avec les paramètres clés tels que décodés pour amener le réseau neuronal à effectuer une transformation de signal de l'audio représentatif du signal audio d'entrée, afin de produire un signal audio de sortie avec une caractéristique audio de sortie qui correspond à la caractéristique audio cible, où :
les paramètres clés représentent une caractéristique audio temporelle cible en tant que caractéristique audio cible ; et
le réseau neuronal est entraîné pour être configuré par les paramètres clés afin d'effectuer la transformation de signal d'une caractéristique audio temporelle d'entrée du signal audio d'entrée en une caractéristique audio temporelle de sortie du signal audio de sortie qui correspond à la caractéristique audio temporelle cible.

14. Procédé selon la revendication 13, dans lequel :
le signal audio d'entrée et le signal audio comprennent des séquences respectives de trames audio ;
les paramètres clés représentent la caractéristique audio cible trame par trame ; et
le réseau neuronal est configuré par les paramètres clés pour effectuer la transformation du signal trame par trame, afin de produire le signal audio de sortie sous la forme d'une séquence de trames audio de sortie.

15. Procédé selon la revendication 13, comprenant en outre le prétraitement du signal audio d'entrée pour produire le signal audio d'entrée prétraité en tant que signal audio.
